# EUROPÄISCHE PATENTSCHRIFT

(11) **EP 2 628 625 B1**
(45) Veröffentlichungstag und Bekanntmachung des Hinweises auf die Patenterteilung: **01.07.2015**
(21) Anmeldenummer: 12197109.7
(22) Anmeldetag: 14.12.2012
(51) Int. Cl.: B60K 17/28

(54) **Traktor mit Zapfwellengetriebe**
Tractor with p.t.o. shaft drive
Tracteur avec engrenage d'arbre de prise de force

(30) Priorität: 15.02.2012 DE 102012002799
(43) Veröffentlichungstag der Anmeldung: 21.08.2013
(73) Patentinhaber: CLAAS Tractor S.A.S., 78141 Vélizy-Villacoublay Cedex (FR)
(72) Erfinder: Momal, Pascal, 78140 Velízy Villacoublay (FR); Vallee, Sebastien, 78170 La Celle Saint Cloud (FR)

(56) Entgegenhaltungen:
- AT-B- 355 919
- GB-A- 1 562 565
- JP-A- S58 221 724
- US-A- 1 645 224
- US-A- 3 001 409

## Beschreibung

Die vorliegende Erfindung betrifft einen Traktor mit einem Zapfwellengetriebe. Eine über ein solches Getriebe angetriebene Zapfwelle ist an der Karosserie des Traktors hinten oder vorne herausgeführt, um ein Anbaugerät wie etwa ein Mähwerk daran anzuschließen und antreiben zu können.

Ein Traktor nach dem Oberbegriff des Anspruchs 1 ist aus GB 1 562 565 bekannt.

Zum Antreiben anderer, insbesondere interner Verbraucher eines Traktors werden verbreitet Treibriemen eingesetzt, die um antriebs- und abtriebsseitige Riemenscheiben geschlungen sind, um Kraft von der einen auf die andere zu übertragen. Der Treibriemen ist ein Verschleißartikel, der im Laufe der Betriebszeit eines Traktors diverse Male ausgetauscht werden muss. Die Riemenscheiben sollten daher gut zugänglich sein und insbesondere nicht mitten auf einer Welle montiert werden, an deren Ende der Treibriemen nicht abgestreift werden kann, z.B. weil dort großformatige Komponenten wie etwa der Hauptmotor selber, ein Getriebe oder dergleichen angeordnet sind. Diese Randbedingungen schränken die Möglichkeiten zur Anbringung von Treibriemen stark ein und zwingen mitunter zu Lösungen, die hinsichtlich Platzbedarf und Gewicht nicht ökonomisch sind.

Aufgabe der vorliegenden Erfindung ist, einen Traktor zu schaffen, bei dem die Platzierung eines Treibriemens weniger einschränkenden Randbedingungen unterliegt.

Die Aufgabe wird mit einem traktor gemäß Anspruch 1 gelöst.

Um eine schnelle Anbringung und Entfernung des Treibriemens zu ermöglichen, sollte die lösbare Verbindung zwischen den Wellenabschnitten zweckmäßigerweise benachbart zu der Riemenscheibe angeordnet sein.

Im gelösten Zustand kann auf die Wellenabschnitte ein Drehmoment senkrecht zur Antriebswelle ausgeübt werden, das zur Beschädigung eines Lagers führen kann. Um die Übertragung eines potentiell zerstörerischen Drehmoments auf ein solches Lager in der Trennstellung zu verhindern, ist der erste Wellenabschnitt zweckmäßigerweise einen verjüngten Bereich aufweisen, der in der Trennstellung in einem solchen Lager radial spielhaltig aufgenommen ist und somit eine Schwenkbewegung des Wellenabschnitts ohne Drehmomentübertragung auf das Lager erlaubt.

Die Gefahr, dass ein Lager durch ein in der Trennstellung versehentlich ausgeübtes Drehmoment beschädigt wird, ist umso größer, je länger der in dem Lager gehaltene Wellenabschnitt ist. Daher ist der gegen Lagerschaden schützende verjüngte Bereich vorzugsweise an dem längeren der beiden Wellenabschnitte vorgesehen.

Das Lager kann zwischen dem ersten und einem dritten Wellenabschnitt angeordnet sein, der mittels einer Kupplung mit dem ersten Wellenabschnitt verbindbar ist, sodass der dritte Wellenabschnitt je nach Zustand der Kupplung gemeinsam mit dem ersten rotiert oder nicht rotiert. Ein solches Lager sollte möglichst leicht und kompakt sein, um das Trägheitsmoment der Antriebswelle nicht unnötig zu erhöhen, und ist daher besonders gefährdet, in der Trennstellung durch ein auf den ersten Wellenabschnitt einwirkendes Biegmoment beschädigt zu werden, sofern es nicht durch den verjüngten Bereich davor geschützt ist.

Die Kupplung ermöglicht ein Stilllegen des Zapfwellengetriebes, wenn kein Anbaugerät an die Zapfwelle angeschlossen ist, und verhindert dadurch Reibungsverluste. Da der An- und Abbau eines Anbaugeräts im Stillstand des Traktors stattfindet, genügt als Kupplung eine Klauenkupplung. So können im Vergleich zu einer Reibkupplung Bauraum und Gewicht eingespart werden.

Die Schwenkbewegungsfreiheit des ersten Wellenabschnitts in der Trennstellung sollte zweckmäßigerweise durch eine den ersten Wellenabschnitt unterstützende Auflage begrenzt sein, um sicherzustellen, dass nicht durch das Gewicht des ersten Wellenabschnitts allein ein kritisches Biegemoment auf das Lager einwirken kann.

Wenn die Riemenscheibe an einem schwenkbeweglichen Wellenabschnitt angeordnet ist, kann die in der Trennstellung mögliche Schwenkbewegung dieses Wellenabschnitts genutzt werden, um einen um die Riemenscheibe geschlungenen Treibriemen zu entspannen und seinen Ausbau zu erleichtern bzw. einen neu eingebauten Treibriemen zu spannen.

Zweckmäßig ist ferner, dass vom ersten und zweiten Abschnitt der Welle der eine einen Vorsprung und der andere eine zu dem Vorsprung komplementäre Aussparung aufweist, die im verbundenen Zustand radial formschlüssig ineinandergreifen. Ein solcher Eingriff kann genutzt werden, um die zwei Wellenabschnitte in der Position, die sie im verbundenen Zustand einnehmen, provisorisch zu positionieren, bevor sie durch Verschrauben oder dergleichen dauerhaft miteinander verbunden werden, und so den Zusammenbau der Wellenabschnitte zu erleichtern. Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen schematischen Schnitt durch den vorderen Bereich der Karosserie eines Traktors;
- Fig. 2: ein kinematisches Diagramm der in Fig. 1 gezeigten Komponenten;
- Fig. 3: einen zu Fig. 1 analogen Schnitt, in dem eine sich zwischen Hauptmotor und Zapfwellengetriebe erstreckende Welle in zwei Wellenabschnitte zerlegt ist; und
- Fig. 4: einen vergrößerten Schnitt durch einen Endbereich des ersten Wellenabschnitts und ein diesen Endbereich aufnehmendes Lager.

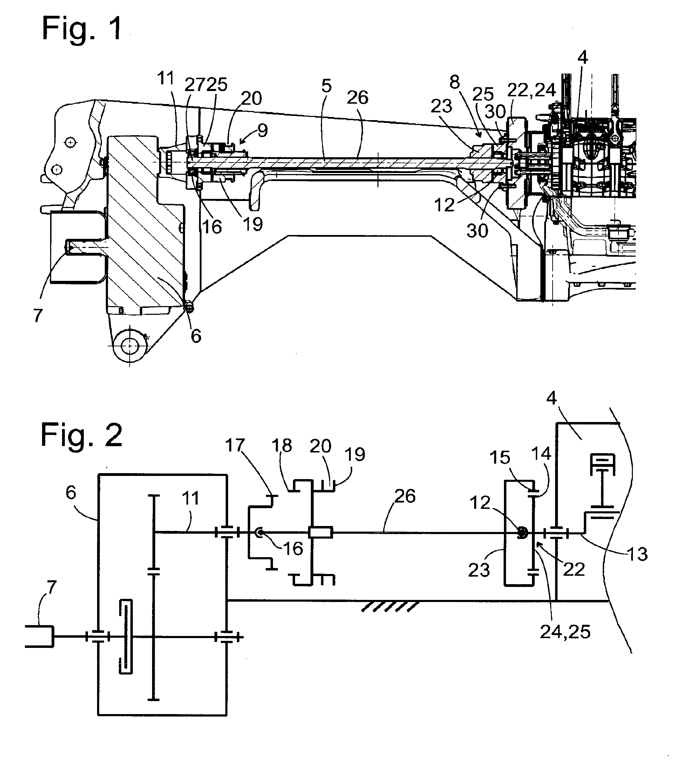

Fig. 1 zeigt einen schematischen Längsschnitt durch den vorderen Bereich der Karosserie eines Traktors. Eine Welle 5 verbindet einen in der Karosserie zentral montierten Dieselmotor 4 mit einem Zapfwellengetriebe 6, dessen Zapfwellenanschluss 7 an einem vorderen Ende der Karosserie herausgeführt ist. Die Welle 5 ist durch zwei homokinetische Gelenke 8, 9 gegliedert in einen dem Motor 4 zugewandten Abschnitt 22, einen langgestreckten Hauptwellenabschnitt 26 und einen getriebeseitigen Wellenabschnitt 11.

Der dem Motor 4 zugewandte Abschnitt 22 der Welle 5 umfasst einen fest mit einer Kurbelwelle 13 (siehe Fig. 2) des Motors 4 verbundenen Flansch 24, an dem ein Basisflansch 25 des ersten homokinetischen Gelenks 8 durch Schrauben 30 lösbar befestigt ist. Einer der beiden Flansche 24, 25 kann als Riemenscheibe ausgebildet sein, an dem ein in der Figur nicht gezeigter Riemen zum Antreiben von ebenfalls nicht dargestellten Hilfsaggregaten des Traktors umläuft.

In einer Aussparung des Basisflanschs 25 ist eine Hülse 12 aufgenommen, die, indem sie das motorseitige Ende des Hauptwellenabschnitts 26 radial fixiert und geringfügige, auf elastische Verformung des Traktorchassis zurückgehende Schwenkbewegungen des Hauptwellenabschnitts 26 zulässt, wie ein Kugelgelenk wirkt und als solches in dem kinematischen Diagramm der Fig. 2 dargestellt ist. Eine Außenverzahnung 14 des Basisflanschs 25 greift mit die Schwenkbewegungen nicht behinderndem axialem und radialem Spiel in eine Innenverzahnung 15 eines an dem Hauptwellenabschnitts 26 drehfest und axial unbeweglich dem Basisflansch 25 gegenüberliegend verankerten Gegenstücks 23 ein, um die Drehmomentübertragung vom Motor 4 auf den Hauptwellenabschnitt 26 zu gewährleisten, auch wenn dieser und die Kurbelwelle 13 nicht exakt koaxial verlaufen.

Der getriebeseitige Wellenabschnitt 11 hat die Form eines Bechers, in dessen Hohlraum ein motorfernes Ende 27 des Hauptwellenabschnitts 26 durch ein Wälzlager 16 gehalten ist. Ein Basisflansch 25 des zweiten homokinetischen Gelenks 9 ist spiegelbildlich zu dem des ersten Gelenks 8 am dem Motor zugewandten Ende des Wellenabschnitts 11 befestigt. Infolgedessen fungiert hier das Wälzlager 16 in ähnlicher Weise wie beim ersten homokinetischen Gelenk 8 die Hülse 12 als ein Kugelgelenk, das ein Ende des Hauptwellenabschnitts 26 fixiert, wenn auch die Bewegungsfreiheit, mit der der Hauptwellenabschnitt 26 in dem Wälzlager 16 schwenken kann, ohne es zu beschädigen, eng begrenzt ist.

Die Außenverzahnung 17 des Basisflanschs 25 wirkt beim zweiten homokinetischen Gelenk 9 mit einer Innenverzahnung 18 einer Muffe 19 zusammen, die am Hauptwellenabschnitt 26 drehfest, aber so weit axial verschiebbar ist, dass der Eingriff zwischen den Verzahnungen 17, 18 aufgehoben werden kann. So bilden die Verzahnungen 17, 18 gleichzeitig eine Klauenkupplung, die in Fig. 2 in offener Stellung gezeigt ist. Eine nicht dargestellte Schaltgabel, die in eine umlaufende Nut 20 der Muffe 19 eingreift, kann zum Schließen der Klauenkupplung dienen.

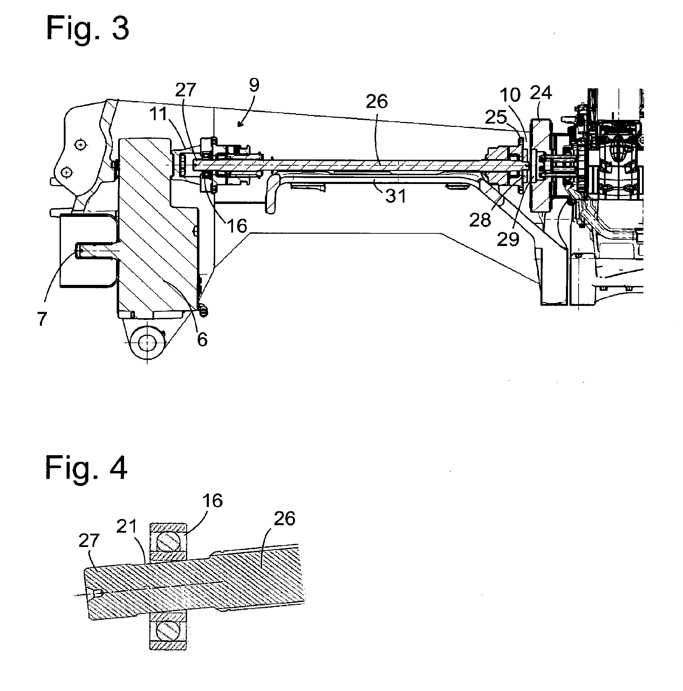

Wie in Fig. 1 zu erkennen, reicht der Hauptwellenabschnitt 26 nicht bis an den Boden des becherförmigen getriebeseitigen Wellenabschnitts 11. Da außerdem auch die Muffe 19 an dem Hauptwellenabschnitt 26 axial verschiebbar ist, ist es nach Lösen der die Flansche 24, 25 verbindenden Schrauben 30 möglich, den Hauptwellenabschnitt 26 zum Zapfwellengetriebe 6 hin zu verschieben und auf diese Weise, wie in Fig. 3 gezeigt, einen Spalt 10 zwischen den Flanschen 24, 25 zu öffnen. Durch diesen Spalt 10 kann ein Riemen hindurchgeführt und auf den als Riemenscheibe dienenden Flansch 24 oder 25 aufgezogen werden.

In der in Fig. 3 gezeigten Konfiguration ist der Hauptwellenabschnitt 26 koaxial zur Kurbelwelle 13 ausgerichtet, und ein Vorsprung 28 des Basisflanschs 25 liegt einer komplementären Aussparung 29 des motorseitigen Flansches 24 unmittelbar gegenüber. Indem bei einem Wiederzusammenbau zunächst der Vorsprung 28 in die Aussparung 29 eingeführt wird, gelangt der Hauptwellenabschnitt 26 in eine stabile, an seinen beiden Enden unterstützte Lage, in der Schraubenlöcher der Flansche 24, 25 miteinander fluchten und die Schrauben 30 leicht wieder gesetzt werden können.

Solange der Vorsprung 28 nicht in die Aussparungen 29 eingreift, ist der Hauptwellenabschnitt 26 nur an seinem motorfernen Ende 27 über das dortige Wälzlager 16 abgestützt. Um zu verhindern, dass dieses durch eine übermäßige Schrägstellung des Hauptwellenabschnitts 26 beschädigt wird, wenn dieser frei herabhängt, ist knapp unterhalb des Hauptwellenabschnitts 26 eine karosseriefeste Auflage 31 vorgesehen, die die Schwenkbewegungsfreiheit des Hauptwellenabschnitts 26 in der Trennstellung der Fig. 3 nach unten auf ein ungefährliches Maß beschränkt. Darüber hinaus greift, wie in Fig. 4 gezeigt, die Verjüngung 21 in der Trennstellung der Fig. 3 in das Wälzlager 16 ein. Auf diese Weise wird zwischen dem inneren Ring des Wälzlagers 16 und dem Hauptwellenabschnitt 26 ein radiales Spiel geschaffen, das beträchtliche Schwenkbewegungen des Hauptwellenabschnitts 26 zulässt, ohne dass dadurch ein Biegemoment auf das Wälzlager 16 einwirkt. Die dadurch erzielte Bewegungsfreiheit erlaubt es, den Hauptwellenabschnitt 26 in der Trennstellung so weit zu schwenken, dass die Flansche 24, 25 einander nicht mehr gegenüberliegen, und erleichtert so das Durchführen eines Riemens durch den Spalt 10.

### Bezugszeichen

- 4: Dieselmotor
- 5: Welle
- 6: Zapfwellengetriebe
- 7: Zapfwellenanschluss
- 8: homokinetisches Gelenk
- 9: homokinetisches Gelenk
- 10: Spalt
- 11: getriebeseitiger Wellenabschnitt
- 12: Hülse
- 13: Kurbelwelle
- 14: Außenverzahnung
- 15: Innenverzahnung
- 16: Wälzlager
- 17: Außenverzahnung
- 18: Innenverzahnung
- 19: Muffe
- 20: Nut
- 21: Verjüngung
- 22: motorseitiger Wellenabschnitt
- 23: Gegenstück
- 24: Flansch
- 25: Basisflansch
- 26: Hauptwellenabschnitt
- 27: motorfernes Ende
- 28: Vorsprung
- 29: Aussparung
- 30: Schraube
- 31: Auflage

## Patentansprüche

1. Traktor mit einem Hauptmotor (4), einem Zapfwellengetriebe (6) und einer eine Riemenscheibe (24, 25) tragenden, den Hauptmotor mit dem Zapfwellengetriebe verbindenden Welle (5), **dadurch gekennzeichnet, dass** die Wolle (5) wenigstens einen ersten und einen zweiten Wellenabschnitt (22; 26) umfasst, die lösbar verbunden sind, von denen im voneinander gelösten Zustand wenigstens der erste (26) in eine Trennstellung axial verschiebbar ist, in der er von dem zweiten Wellenabschnitt (22) durch einen Spalt getrennt ist, und wobei der erste Wellenabschnitt (26) einen verjüngten Bereich (21) aufweist, der in der Trennstellung in einem Lager. (16) radial spielhaltig aufgenommen ist.

2. Traktor nach Anspruch 1, **dadurch gekennzeichnet, dass** eine lösbare Verbindung zwischen den Wellenabschnitten (22, 26) benachbart zur Riemenscheibe (24; 25) angeordnet ist.

3. Traktor nach Anspruch 1 oder 2, **dadurch gekennzeichnet, dass** der erste Wellenabschnitt (26) länger als der nicht axial verschiebbare zweite Wellenabschnitt (22) ist.

4. Traktor nach einem der vorigen Ansprüche, **dadurch gekennzeichnet, dass** das Lager (16) zwischen dem ersten (26) und einem dritten Wellenabschnitt (11) angeordnet ist, der mittels einer Kupplung (17, 18) mit dem ersten Wellenabschnitt (26) verbindbar ist.

5. Traktor nach Anspruch 4, **dadurch gekennzeichnet, dass** die Kupplung (17, 18) eine Klauenkupplung ist.

6. Traktor nach einem der vorhergehenden Ansprüche, **dadurch gekennzeichnet, dass** im gelösten Zustand wenigstens einer der Wellenabschnitte (26) schwenkbeweglich ist.

7. Traktor nach Anspruch 6, **dadurch gekennzeichnet, dass** die Schwenkbewegungsfreiheit des schwenkbaren Wellenabschnitts (26) durch eine den schwenkbaren Wellenabschnitt (26) unterstützende Auflage (31) begrenzt ist.

8. Traktor nach Anspruch 6 oder 7, **dadurch gekennzeichnet, dass** die Riemenscheibe (25) an dem schwenkbeweglichen Wellenabschnitt (26) angeordnet ist.

9. Traktor nach einem der vorhergehenden Ansprüche, **dadurch gekennzeichnet, dass** von erstem und zweitem Abschnitt (26; 22) der Welle (5) der eine einen Vorsprung (28) und der andere eine zu dem Vorsprung (28) komplementäre Aussparung (29) aufweist, die im verbundenen Zustand radial formschlüssig ineinandergreifen.

## Claims

1. A tractor comprising a main engine (4), a power take-off transmission (6) and a shaft (5) carrying a belt pulley (24, 25) and connecting the main engine to the power take-off transmission, **characterised in that** the shaft (5) includes at least a first and a second shaft portion (22; 26) which are releasably connected and of which in the condition of being released from each other at least the first (26) is axially displaceable into a separation position in which it is separated from the second shaft portion (22) by a gap and wherein the first shaft portion (26) has a tapered region (21) which in the separation position is received in radially clearance-maintaining relationship in a bearing (16).

2. A tractor according to claim 1 **characterised in that** a releasable connection between the shaft portions (22, 26) is arranged adjacent to the belt pulley (24; 25).

3. A tractor according to claim 1 or claim 2 **characterised in that** the first shaft portion (26) is longer than the second shaft portion (22) which is not axially displaceable.

4. A tractor according to one of the preceding claims **characterised in that** the bearing (16) is arranged between the first (26) and a third shaft portion (11) which can be connected to the first shaft portion (26) by means of a coupling (17, 18).

5. A tractor according to claim 4 **characterised in that** the coupling (17, 18) is a dog coupling.

6. A tractor according to one of the preceding claims **characterised in that** in the released condition at least one of the shaft portions (26) is pivotably movable.

7. A tractor according to claim 6 **characterised in that** the freedom of pivotal movement of the pivotable shaft portion (26) is limited by a support (31) supporting the pivotable shaft portion (26).

8. A tractor according to claim 6 or claim 7 **characterised in that** the belt pulley (25) is arranged on the pivotably movable shaft portion (26).

9. A tractor according to one of the preceding claims **characterised in that** of the first and second portions (26; 22) of the shaft (5) the one has a projection (28) and the other has an opening (29) complementary to the projection (28), the projection and the opening engaging into each other in radially positively locking relationship in the connected condition.

## Revendications

1. Tracteur comprenant un moteur principal (4), une transmission de prise de force (6) et un arbre (5) portant une poulie (24, 25) et reliant le moteur principal à la transmission de prise de force, **caractérisé en ce que** l'arbre (5) comprend au moins une première et une deuxième portion d'arbre (22 ; 26) qui sont reliées de manière détachable, dont, à l'état détaché l'une de l'autre, au moins la première (26) peut coulisser axialement dans une position de séparation dans laquelle elle séparée de la deuxième portion d'arbre (22) par un espace, la première portion d'arbre (26) présentant une zone rétrécie (21) qui, dans la position de séparation, est reçue avec un jeu radial dans un palier (16).

2. Tracteur selon la revendication 1, **caractérisé en ce qu'**une liaison détachable est disposée entre les portions d'arbre (22, 26) au voisinage de la poulie (24 ; 25).

3. Tracteur selon la revendication 1 ou 2, **caractérisé en ce que** la première portion d'arbre (26) est plus longue que la deuxième portion d'arbre (22) non coulissante axialement.

4. Tracteur selon l'une des revendications précédentes, **caractérisé en ce que** le palier (16) est disposé entre la première (26) et une troisième portion d'arbre (11) pouvant être reliée à la première portion d'arbre (26) au moyen d'un accouplement (17, 18).

5. Tracteur selon la revendication 4, **caractérisé en ce que** l'accouplement (17, 18) est un accouplement à griffes.

6. Tracteur selon l'une des revendications précédentes, **caractérisé en ce que**, à l'état détaché, au moins une des portions d'arbre (26) est mobile en pivotement.

7. Tracteur selon la revendication 6, **caractérisé en ce que** la liberté du mouvement de pivotement de la portion d'arbre pivotante (26) est limitée par un support (31) qui soutient la portion d'arbre pivotante (26).

8. Tracteur selon la revendication 6 ou 7, **caractérisé en ce que** la poulie (25) est disposée sur la portion d'arbre mobile en pivotement (26).

9. Tracteur selon l'une des revendications précédentes, **caractérisé en ce que**, de la première et de la deuxième portion (26 ; 22) de l'arbre (5), l'une présente une saillie (28) et l'autre un évidement (29) complémentaire à la saillie (28), lesquels, à l'état relié, s'engagent l'un dans l'autre radialement par complémentarité de formes.
